# EUROPEAN PATENT APPLICATION

(11) **EP 4 195 056 A1**
(43) Date of publication of application: **14.06.2023**
(21) Application number: 21854064.9
(22) Date of filing: 04.08.2021
(51) Int. Cl.: G06F 13/00, G06F 21/62, H04L 12/66

(54) **COMMUNICATION CONTROL DEVICE, COMMUNICATION CONTROL METHOD, AND COMMUNICATION CONTROL PROGRAM**

(30) Priority: 07.08.2020 JP 2020135104
(71) Applicant: NTT Communications Corporation, Tokyo 100-8019 (JP)
(72) Inventor: TAKADA, Tomonori, Tokyo 100-8019 (JP); AKABORI, Hideaki, Tokyo 100-8019 (JP); KISHIDA, Tsunechika, Tokyo 100-8019 (JP); KOBAYASHI, Yoshihiko, Tokyo 100-8019 (JP); SUZUKI, Masataka, Tokyo 100-8019 (JP); MINAKUCHI, Tohru, Tokyo 100-8019 (JP)
(74) Representative: Gramm, Lins & Partner Patent- und Rechtsanwälte PartGmbB
(86) International application number: PCT/JP2021/028974
(87) International publication number: WO 2022/030553

(57) **Abstract**

A communication control apparatus according to an aspect of the present invention downloads and acquires, from a center server on a cloud, an approval rule by an approver of upload in upload of a data file to the center server. The approval rule is stored in the center server. When any data file is uploaded to the center server, the communication control apparatus acquires approval of upload of the any data file from the approver in accordance with the acquired approval rule, and uploads the data file to the center server on condition that approval of upload of the data file has been acquired from the approver.

## Description

### FIELD

Embodiments of the invention relate to a communication control apparatus, a communication control method, and a communication control program.

### BACKGROUND

It has been increasingly executed widely to upload data files in a center server on a cloud, storing the data files on the center server, and executing various types of processing using the data files.

### CITATION LIST

### PATENT LITERATURE

Patent Literature 1: Japanese Patent Application Publication No. 2018-116528

### SUMMARY

### TECHNICAL PROBLEM

By contrast, particularly in recent years, a demand for safely handling data provided by companies or individuals is increasing. For this reason, laws relating to handling of data and property right have been enacted in a plurality of countries and regions. For example, in Japan, amendment was made relating to handling of limitedly provided data in the Unfair Competition Prevention Act in 2018. In the amendment, data satisfying certain conditions and provided to limited sharing parties is defined as limitedly provided data, and illegal acquisition, use, and disclosure thereof are placed in unfair competition. In addition, laws relating to protection of personal information have been set, such as General Data Protection Regulation (GDPR) in EU and California Consumer Privacy Act (CCPA) in U.S.A., and movement to protect provided user information have been proceeded.

For this reason, in companies developing branch offices, subsidiary companies, or affiliated companies in a plurality of countries and/or regions, it is required to conform to laws and ordinances of the countries and/or regions in which the branch offices and the like are placed.

In addition, because affiliate companies are entities separated from the head office, they have information to be concealed from the head office. Subsidiary companies and branch offices may also have information to be concealed from the head office.

In prior art, it entirely depends on the sender's determination whether to upload data files to the center server. For this reason, there is possibility of upload, to the center server, of data files including information with disclosure restriction and including confidentiality information and/or data contents conflicting with the laws and ordinances of the country and/or the region.

The present invention has been made with attention to the above circumstances, and an object thereof is to provide a technique of reducing the possibility of inappropriate upload of data files including information with disclosure restriction to the center server.

### SOLUTION TO PROBLEM

To solve the problem described above, an aspect of a communication control apparatus and a communication control method according to the present invention is downloading and acquiring from an approval rule by an approver of upload in upload of data files to a center server, the approval rule being stored in the center server on a cloud, acquiring approval of upload of any data file from the approver in accordance with the acquired approval rule, when the any data file is uploaded to the center server, and uploading the data file to the center server on condition that approval has been acquired from the approver for upload of the data file.

### ADVANTAGEOUS EFFECTS OF INVENTION

According to an aspect of the present invention, when a data file is uploaded to the center server, the data file is uploaded on condition that the approver has approved upload. This structure provides a technique of reducing the possibility of inappropriate upload of a data file including information with disclosure restriction to the center server.

### BRIEF DESCRIPTION OF THE DRAWINGS

FIG. 1 is a diagram illustrating whole configuration of a communication system including an edge server serving as a communication control apparatus according to a first embodiment of the present invention.
FIG. 2 is a block diagram illustrating hardware configuration of the edge server according to the first embodiment.
FIG. 3 is a block diagram illustrating software configuration of the edge server according to the first embodiment.
FIG. 4 is a diagram illustrating an example of a file rule table downloaded to the edge server according to the first embodiment.
FIG. 5 is a diagram illustrating an example of a file determination register provided on the edge server according to the first embodiment.
FIG. 6 is a diagram illustrating an example of an approval destination register provided on the edge server according to the first embodiment.
FIG. 7 is a flowchart illustrating a processing procedure of data file upload control executed with the edge server according to the first embodiment.
FIG. 8 is a flowchart illustrating a processing procedure of file check processing in the processing procedure illustrated in FIG. 7.
FIG. 9 is a flowchart illustrating a processing procedure of transmission processing in the processing procedure illustrated in FIG. 7.
FIG. 10 is a diagram illustrating an example of a data rule table downloaded to an edge server serving as a communication control apparatus according to a second embodiment.
FIG. 11 is a diagram illustrating another example of the data rule table downloaded to the edge server according to the second embodiment.
FIG. 12 is a diagram illustrating an example of a file determination register provided on the edge server according to the second embodiment.
FIG. 13 is a diagram illustrating an example of a confidentiality item register provided on the edge server according to the second embodiment.
FIG. 14 is a flowchart illustrating a processing procedure of file check processing in the processing procedure of data file upload control executed with the edge server according to the second embodiment.
FIG. 15 is a flowchart illustrating a processing procedure of transmission processing in the processing procedure of data file upload control executed with the edge server according to the second embodiment.
FIG. 16 is a diagram illustrating an example of a data file.
FIG. 17 is a flowchart illustrating a processing procedure of data file download control executed with an edge server serving as a communication control apparatus according to a third embodiment.
FIG. 18 is a flowchart illustrating a processing procedure of confidentiality processing in the processing procedure illustrated in FIG. 17.

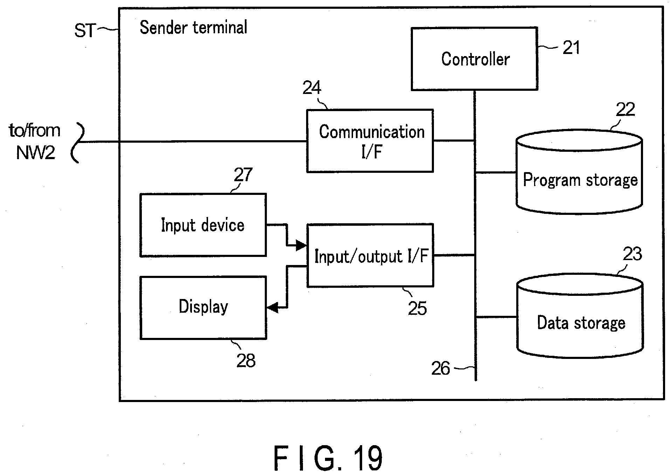

FIG. 19 is a block diagram illustrating hardware configuration of a sender terminal serving as a communication control apparatus according to a fourth embodiment of the present invention.
FIG. 20 is a block diagram illustrating software configuration of the sender terminal according to the fourth embodiment.

### DETAILED DESCRIPTION

### <First Embodiment>

### (Configuration Example)

### (1) System

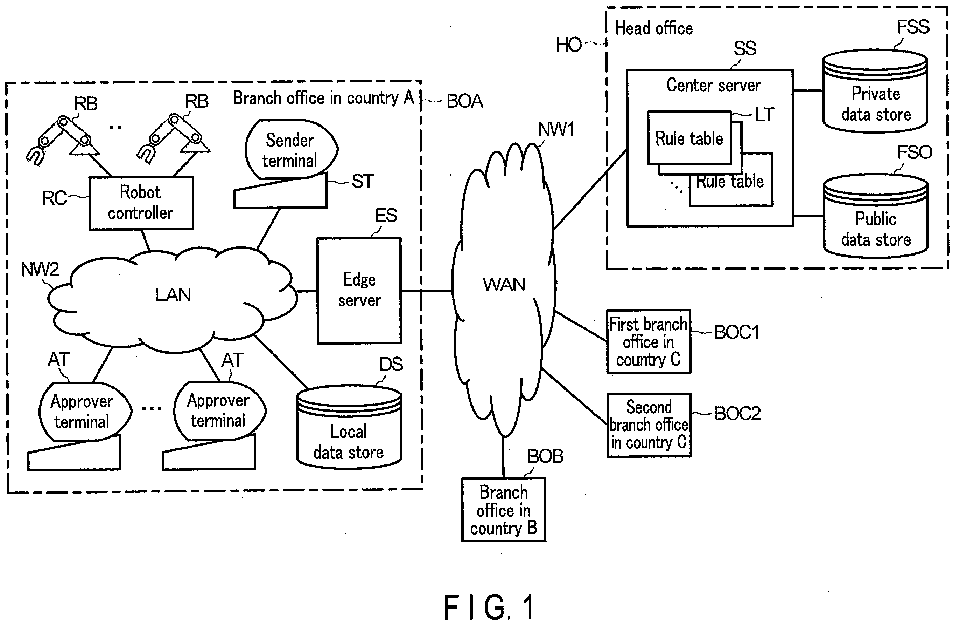

FIG. 1 is a diagram illustrating an overall structure of a communication system including a communication control apparatus according to a first embodiment of the present invention.

The communication system according to the first embodiment is a system executing communication between a head office HO and branch offices, subsidiary companies, or affiliated companies (hereinafter referred to as "branch offices in countries" as a generic term) located in various countries or various regions, via a wide area network (WAN) NW1, such as the Internet. FIG. 1 illustrates a branch office BOA in country A, a branch office BOB in country B, a first branch office BOC1 in country C, and a second branch office BOC2 in country C as branch offices in countries, but the number of branch offices in countries are not limited thereto, and the number of branch offices in each country is not limited thereto as a matter of course. The branch offices in countries may include a branch office in the same country as that of the head office HO.

The head office includes a center server SS communicating with the branch offices in countries via the wide area network NW1, and a center data store storing various data files uploaded from the branch offices in countries and received with the center server SS.

The center data store includes a private data store FSS storing private data files serving as in-house data files including data files that limited users in the head office can access and data files that everyone in the head office can access. The center data store also includes a public data store FSO storing public data files serving as open data files widely opened to inside and outside of the head office. The private data store FSS and the public data store FSO may be provided as physically separated data stores, or may use divided areas in one data store.

In addition, the center server S stores rule tables LT for respective branch offices in countries. Each of the rule tables LT defines a rule relating to upload of a data file in the branch office, such as an approval rule by the approver for upload in upload of a data file. The rule tables LT can be prepared by the manager of the center server or the like on the basis of the circumstances of the branch offices in the countries and/or the laws and ordinances of the countries and/or regions in which the branch offices are located, and stored in the center server SS. Preparation of a rule table LT may be executed whenever a new rule is required by establishment of a new branch office, or whenever update of the rule is required due to change in the situation of the branch office and/or amendment of the laws and ordinance of the country and/or region.

Each of the branch offices can upload various data files, such as Internet of things (IoT) data files prepared therein to the center server SS of the head office HO via the wide area network NW1. Each of the branch offices is provided with an edge server ES serving as a communication control apparatus according to the first embodiment of the present invention to execute communication control, such as upload of the data files.

Because the branch offices in countries have similar system configurations, FIG. 1 illustrates only system configuration of the branch office BOA in country A, as a representative. The system configuration of the branch office BOA in country A will be described hereinafter, and the explanation thereof will also be applied to the other branch offices.

The branch office BOA in country A includes, for example, a production line (not illustrated). The production line is provided with a plurality of units of manufacturing equipment RB arranged along a movement direction thereof. The manufacturing equipment RB share and execute work of assembling sets by bending and joining plate-like components carried from another line (not illustrated) or a component supplying apparatus to form a base of each set and attaching a plurality of components to the base stepwise.

Each unit of the manufacturing equipment RB is formed of an assembly robot, and executes predesignated assembling operations under the control of a robot controller RC, such as programmable logic controller (PLC). Each unit of the manufacturing equipment RB is provided with a plurality of sensors (not illustrated) to control and monitor the assembling operations. These sensors output sensor data indicating operation states of respective regions of the manufacturing equipment RB. The sensor data output from the respective sensors are transferred to a local data store DS via a premises network (local area network: LAN) NW2 constructed in the branch office BOA in country A, as a sensor data file in desired unit, and stored therein.

Any structures may be adopted as the structure of the production line, the type and/or the installation number of the manufacturing equipment RB, the work details of the manufacturing equipment RB, the structure of products produced by the manufacturing equipment RB, and the type and/or details of the operation state detected with the sensors. The premises network NW2 is not limited to a wired network, but may be a wireless network.

The premises network NW2 may be further connected to a plurality of information processing apparatuses including a sender terminal ST and approver terminals AT, and an edge server ES.

Each of the information processing apparatuses is capable of preparing various data files, such as a drawing data file, a document data file, and a sales data file. The prepared data files can be stored in the local data store DS via the premises network NW2, in the same manner as the sensor data files prepared with the robot controller RC.

The sender terminal ST is an information processing apparatus executing a predetermined operation to select a data file stored in the sender terminal ST or local data store DS as desired by the sender being the user of the sender terminal ST, and upload the data file to the center server SS of the head office HO.

The edge server ES can select a predetermined data file stored in the local data store DS, regularly or at desired point in time, in accordance with a control program, and upload the data file to the center server SS of the head office HO. Specifically, the edge server ES itself can be a sender.

Each of the approver terminals AT is an information processing apparatus used by the approver who approves upload of the data file selected by the sender as an upload target.

Although not illustrated, a plurality of information processing apparatuses used by employees other than the sender exist in the branch office BOA in country A. Either of the information terminals used by the other employees and the approver terminal AT can serve as the sender terminal ST, when the user thereof is going to upload of the data file. Specifically, although FIG. 1 illustrates only one sender terminal ST, there are a plurality of potential sender terminals ST in the branch office BOA in country A.

Although not particularly illustrated, the center server SS, the private data store FSS, and the public data store FSO of the head office HO can be connected to each other via a premises network, in the same manner as the branch office BOA in country A. A plurality of information processing apparatuses in the head office HO can be connected to the premises network of the head office HO.

### (2) Edge server ES

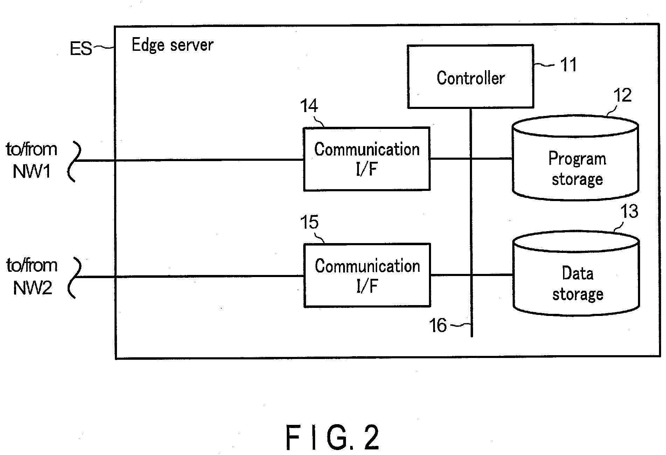

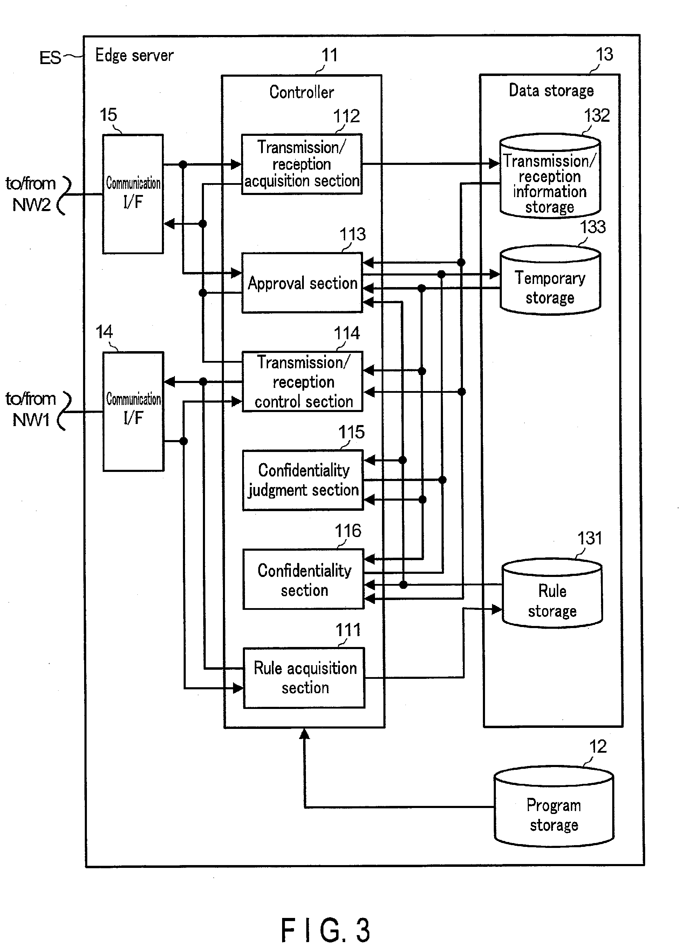

FIG. 2 and FIG. 3 are block diagrams illustrating hardware configuration and software configuration, respectively, of the edge server ES.

The edge server ES is formed of, for example, a server computer or a PC. The edge server ES includes a controller 11 including a hardware processor, such as a central processing unit (CPU), and has a structure in which the controller 11 is connected with a program storage 12, a data storage 13, and communication interfaces (hereinafter referred to as "communication I/F") 14 and 15 via a bus 16.

The communication I/F 14 includes a communication unit executing data communication with the wide area network NW1 in accordance with a communication protocol defined with the wide area network NW1. The communication I/F 14 downloads the rule table LT from the center server SS of the head office HO via the wide area network NW1, under the control of the controller 11. The communication I/F 14 also uploads a data file to the center server SS of the head office HO, under the control of the controller 11.

The communication I/F 15 includes a communication unit executing data communication with the premises network NW2 in accordance with a communication protocol defined with the premises network NW2. The communication I/F 15 receives an instruction and/or data from any of the information processing apparatuses including, for example, the sender terminal ST and the approver terminals AT, via the premises network NW2, under the control of the controller 11. The communication I/F 15 can also transmit an instruction and/or data in the reverse direction. In addition, the communication I/F 15 can receive various types of setting information from the information processing apparatus serving as a manager terminal (not illustrated) used by the manager of the edge server ES, and transmit display information indicating the setting details to the information processing apparatus, via the premises network NW2.

The program storage 12 is formed of, for example, a nonvolatile memory enabling writing and reading at any time, such as a hard disk drive (HDD) or a solid state drive (SSD), as a main storage medium. The storage area of the program storage 12 stores a program to execute various types of processing according to the first embodiment, in addition to middleware, such as an operating system (OS). The storage medium may be formed of a combination of the HDD or the SSD and a read only memory (ROM).

The data storage 13 is formed of, for example, a combination of an HDD or an SSD and a random access memory (RAM), and includes a storage area provided with a rule storage 131, a transmission/reception information storage 132, and a temporary storage 133 used in the first embodiment.

The rule storage 131 stores the rule table LT corresponding to the branch office BOA in country A and downloaded from the center server S of the head office HO via the wide area network NW1. Storage of the rule table LT in the rule storage 131 can be executed by automatically downloading the rule table from the center server SS via the wide area network NW1 under the control of the controller 11, when operation of the edge server ES is started. The rule table LT may be stored in the rule storage 131 by downloading the corresponding rule table LT from the center server SS via the wide area network NW1 under the control of the controller 11, in response to reception of a download instruction input by the manager of the edge server ES from the manager's information processing apparatus via the premises network NW2.

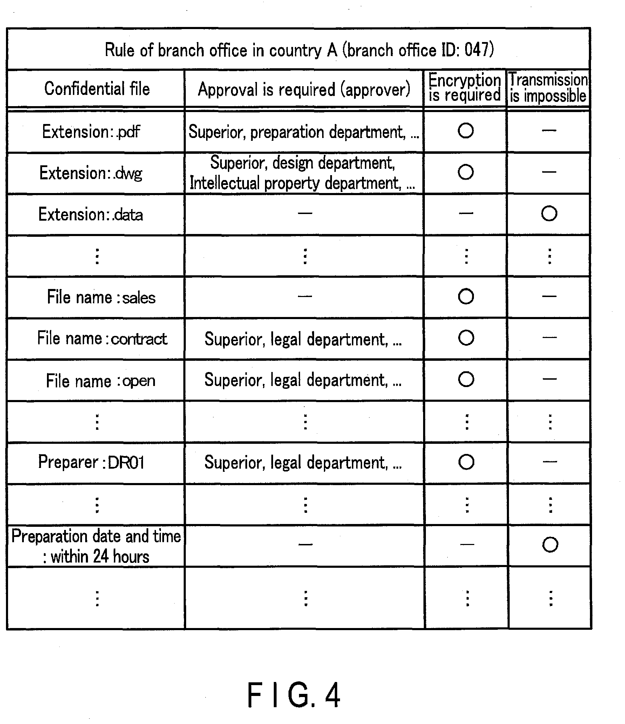

The rule table LT can be a file rule table relating to data files. FIG. 4 is a diagram illustrating an example of a file rule table. In the first embodiment, the file rule table provides items "approval is required", "encryption is required", and "transmission is impossible" in association with confidential properties with which the data file may be a confidential file with disclosure restriction.

Each of the confidential properties is a value that can be specified from file property information and enabling specification of the contents of the file to certain extent without determining the contents of the data file serving as the upload target. For example, the confidential profile can include a value specifying the extension of the file, a character string included in the file name, a character string indicating the preparer of the file, and/or a value providing the preparation date and time of the file, and the like. The file rule table provides the items "approval is required", "encryption is required", and/or "transmission is impossible" for each of the data files.

The item "approval is required" describes the approver whose approval is required if approval by the approver is required, in the case where the data file serving as the upload target corresponds to the confidential file. Specifically, with respect to some files, it is assumed that the sender's superior alone cannot determine whether to approve upload of the files. For this reason, in the present embodiment, upload of a file can be approved by a plurality of approvers.

The items "encryption is required" and "transmission is impossible" provide the confidentiality processing method for the data file. The item "encryption is required" shows a value indicating encryption is required, if encryption is required when the data file is to be uploaded, in the case where the data file serving as the upload target corresponds to the confidential file. The item "transmission is impossible" shows a value indicating that transmission of the data file is prohibited, that is, upload thereof is impossible, if the data file serving as the upload target corresponds to the confidential file.

FIG. 4 illustrates an example of a file rule table having a branch office ID "47" corresponding to the branch office BOA in country A. The branch office ID is identification information to uniquely identify each branch office. By storing the rule table LT being the file rule table with the branch office ID in the center server SS, the edge server ES is enabled to specify the rule table LT necessary for the branch office thereof and download the rule table LT. For example, in the example of the file rule table of FIG. 4, for the extension "pdf" serving as a confidential property of a confidential file, the file rule table shows that approver's approval is required, shows "preparer's superior, approver of the preparation department of the data file, and the like" as the approvers, and shows a value indicating that encryption is required. In addition, for the file name "contract" and the preparer "DR01" serving as confidential properties of the confidential file, the file rule table shows that approver's approval is required, shows "preparer's superior, approver of the legal department, and the like" as the approvers, and shows a value indicating that encryption is required. These rules are applied with respect to the file name and the preparer, if the corresponding character string is included in part of the character string specifying the file name of the data file or preparer of the data file. The file rule table also shows that transmission of a message including a data file is impossible, for the preparation date and time "within 24 hours" serving as a confidential property.

A transmission/reception information storage 132 is used for storing a data file upload of which has been instructed from the sender terminal ST.

The temporary storage 133 is used to temporarily store various data generated during various types of processing executed with the controller 11 according to the first embodiment. For example, the temporary storage 133 can store a file determination register, an approval destination register, and the like.

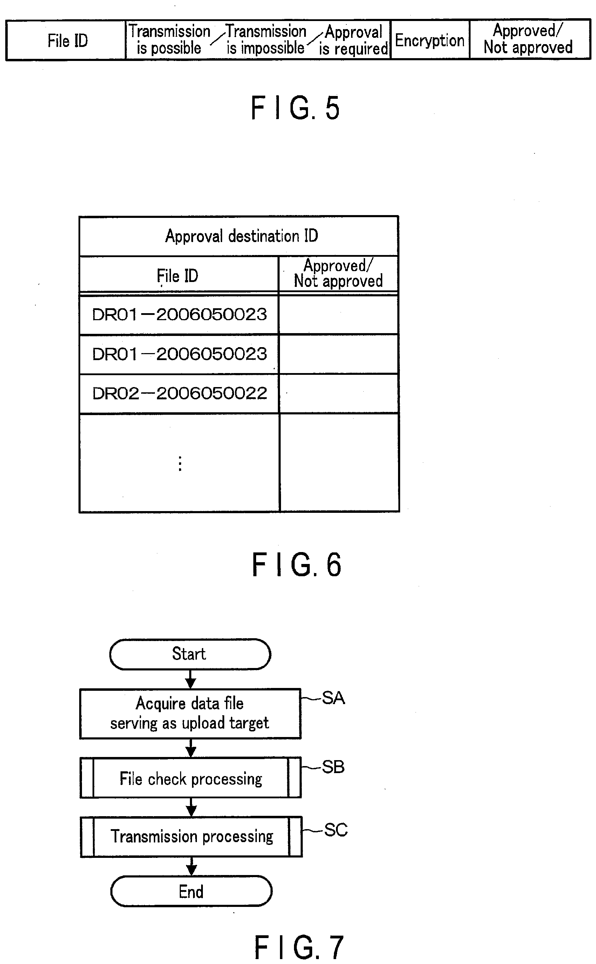

FIG. 5 is a diagram illustrating an example of a file determination register stored in the temporary storage 133 for each of data files to be uploaded. The file determination register stores, in association with the file ID to distinguish each of the data files, such as a file name, information indicating "transmission is possible/transmission is impossible/ approval is required", information indicating whether encryption is required, and information indicating "approved" or "not approved" serving as an approver's approval result. The information "transmission is possible/transmission is impossible/approval is required" is information indicating whether upload of the data file is permitted (transmission is possible), prohibited (transmission is impossible), or requires approver's approval (approval is required). The information "transmission is possible/transmission is impossible/approval is required" and the information indicating whether encryption is required, and information indicating "approved" or "not approved" can be stores as, for example, a 4-bit flag. A 2-bit flag in the 4 bits can indicate whether upload of the data file is permitted, prohibited, or requires approver's approval. For example, the values of the flag can be set such that the value "00" is the initial value of the flag indicating that the state is not settled, the value "10" of the flag indicates "transmission is possible", the value "01" of the flag indicates "transmission is impossible", and the value "11" of the flag indicates "approval is required". In addition, a 1-bit flag indicates whether encryption is required for upload of the data file. For example, the flag value "0" indicating that encryption is not required is set as an initial value, and the value "1" of the flag can be set to indicate that "encryption is required". The remaining 1-bit flag indicates whether the data file has been approved by the approver. For example, the flag value "0" indicating the approval result indicating "not approved" is set as an initial value, and the approval result can indicate "approved" with the flag value "1".

FIG. 6 is a diagram illustrating an example of the approval destination register. The approval destination register is provided for each of approvers or each of approver terminals AT. Specifically, the approval destination register stores the item "approved/not approved" in association with the file ID, for each of the approval destination ID indicating the approver or the approver terminal AT. The item "approved/not approved" indicates an approval result of the corresponding data file by the approver. For example, the value "0" indicating the approval result indicating "not approved" is set as an initial value, and the value "1" is stored when approval is acquired.

The controller 11 includes a rule acquisition section 111, a transmission/reception acquisition section 112, an approval section 113, a transmission/reception control section 114, a confidentiality judgment section 115, and a confidentiality section 116, as processing functions according to the first embodiment of the present invention. Each of these processing sections 111 to 116 are achieved by executing a program stored in the program storage 12 with a hardware processor of the controller 11.

The rule acquisition section 111 executes processing of receiving a rule table corresponding to the branch office BOA in country A via the communication I/F 14 from the center server SS of the head office HO via the wide area network NW1, and storing the rule table in the rule storage 131 of the data storage 13.

The transmission/reception information acquisition section 112 receives an upload instruction designating a data file serving as the upload target from the sender terminal ST via the communication I/F 15. The transmission/reception information acquisition section 112 executes processing of reading the instructed data file serving as the upload target from the local data store DS or the like via the communication I/F 15, and storing the data file in the transmission/reception information storage 132 of the data storage 13.

The approval section 113 executes processing of determining whether approver's approval is required, for each of the data files serving as the upload target and stored in the transmission/reception information storage 132, on the basis of the approval rule defined in the rule table stored in the rule storage 131. For example, the approval section 113 determines whether the data file serving as the upload target matches with any of confidential properties of the confidential file in the rule table stored in the rule storage 131 and, if the data file matches, can determine that the data file requires approver's approval. If the approval section 113 determines that the data file requires approver's approval, the approval section 113 further executes processing of specifying the approver from whom approval should be acquired, on the basis of specification information specifying the approver who should execute approval and defined for the confidential file in the rule table stored in the rule storage 131.

In addition, the approval section 113 executes processing of acquiring approval from the specified approver. Specifically, Specifically, the approver section 113 executes processing of transmitting an approval request to the approver terminal AT of the specified approver via the communication I/F 15. In this operation, the approval section 113 can extract the file name of the data file serving as the upload target and stored in the transmission/reception information storage 132, include the information in the approval request, and transmit the approval request. The approver can determine whether to permit or prohibit upload of the data file, on the basis of the information included in the approval request displayed on the approver terminal AT. Thereafter, the approval section 113 executes processing of receiving an approval result from the approver terminal AT via the communication I/F 15, and storing the approval result in the temporary storage 133.

The transmission/reception control section 114 executes processing of transmitting the data file stored in the transmission/reception information storage 132 from the communication I/F 14 to the center server SS of the head office HO, on condition that the approval section 113 has acquired approval of upload of the data file from the approver. When the data file is uploaded, the transmission/reception control section 114 can designate the private data store FSS as the storage destination for the data file determined with the approval section 113 as a file requiring approver's approval, and designate the public data store FSO as the storage destination for the data file determined with the approval section 113 as a file requiring no approver's approval, to upload the data file. If no approval of upload of the data file is acquired from the approver with the approval section 113, the transmission/reception control section 114 executes processing of transmitting a transmission impossible notification indicating that upload of the data file has not been permitted to the sender terminal ST serving as the upload request source from the communication I/F 15.

The confidentiality judgment section 115 executes processing of judging whether the data file requires confidentiality, for each of the data files serving as the upload target and stored in the transmission/reception information storage 132, on the basis of the rule table stored in the rule storage 131. Specifically, the confidentiality judgment section 115 judges whether the confidentiality processing method of "encryption is required" or "transmission is impossible" is set in the confidential file in the rule table stored in the rule storage 131 for the data file determined with the approval section 113 as a file requiring approver's approval. If "encryption is required" is set as the confidentiality processing method, the confidentiality judgment section 115 can judge that encryption is required for the data file serving as the upload target. If "transmission is impossible" is set as the confidentiality processing method, the confidentiality judgment section 115 can judge that upload of the data file is prohibited.

The confidentiality section 116 executes confidentiality processing based on the confidentiality processing method set in rule table stored in the rule storage 131, for the data file judged with the confidentiality judgment section 115 as a file requiring approver's approval. For example, if "encryption of the data file" is set as the confidentiality processing method, the confidentiality section 116 encrypts the data file. The encryption method is not specified in the present embodiment. For example, the confidentiality section 116 can convert the data file into a compressed file with a password. If "transmission is impossible" is set as the confidentiality processing method, for example, the confidentiality section 116 prohibits upload of the data file.

Thus, the transmission/reception control section 114 executes processing of uploading a data file having been subjected to confidentiality processing with the confidentiality section 116 as necessary. In the upload, with respect to a data file decided with the approval section 113 as a file requiring approver's approval, the transmission/reception control section 114 executes processing of transmitting the data file under the condition that the approval section 113 has acquired approval from the approver.

### (Operation Example)

The following is an explanation of an operation example of the edge server ES configured as described above.

The controller 11 of the edge server ES executes processing of downloading the rule table under the control of the rule storage 111, on startup or in response to reception of a download instruction issued by the manager of the edge server ES with the communication I/F 105 via the premises network NW2. Specifically, the rule acquisition section 111 downloads the rule table LT corresponding to the branch office thereof with the communication I/F 104 from the center server SS via the wide area network NW1, and stores the rule table LT in the rule storage 131.

### (1) Upload of data file

Thereafter, the controller 11 of the edge server ES determines whether to upload the data file, and can execute the following upload control if upload is required, under the control of the transmission/reception information acquisition section 112. The transmission/reception information acquisition section 112 determines that upload is required, for example, if an upload instruction designating a data file serving as the upload target is received via the communication I/F 15 from the sender terminal ST via the premises network NW2. In addition, the transmission/reception information acquisition section 112 determines that upload of a predetermined data file stored in the local data store DS is required regularly or at desired point in time, in accordance with a control program.

FIG. 7 is a flowchart illustrating a processing procedure of data file upload control executed with the controller 11 of the edge server ES.

At Step SA, the controller 11 acquires a data file serving as the upload target, under the control of the transmission/reception information acquisition section 112. Specifically, the transmission/reception information acquisition section 112 acquires a data file designated by the sender or a predetermined data file, stored in the local data store DS, with the communication I/F 15 via the premises network NW2. The transmission/reception information acquisition section 112 stores the acquired data file in the transmission/reception information storage 132 of the data storage 13. A plurality of files serving as the upload target may exist.

Thereafter, at Step SB, the controller 11 executes file check processing based on the rule defined in the rule table stored in the rule storage 131, for the data file stored in the transmission/reception information storage 132, under the control of the confidentiality judgment section 115. The file check processing is processing of determining whether the data file serving as the upload target is a confidential file. The details of the file check processing will be described later.

At Step SC, the controller 11 executes transmission processing of uploading the data file in accordance with a file check result at Step SB described above, under the control of the approval section 113, the transmission/reception control section 114, and the confidentiality section 116. The details of the transmission processing will be described later.

### (2) File check processing

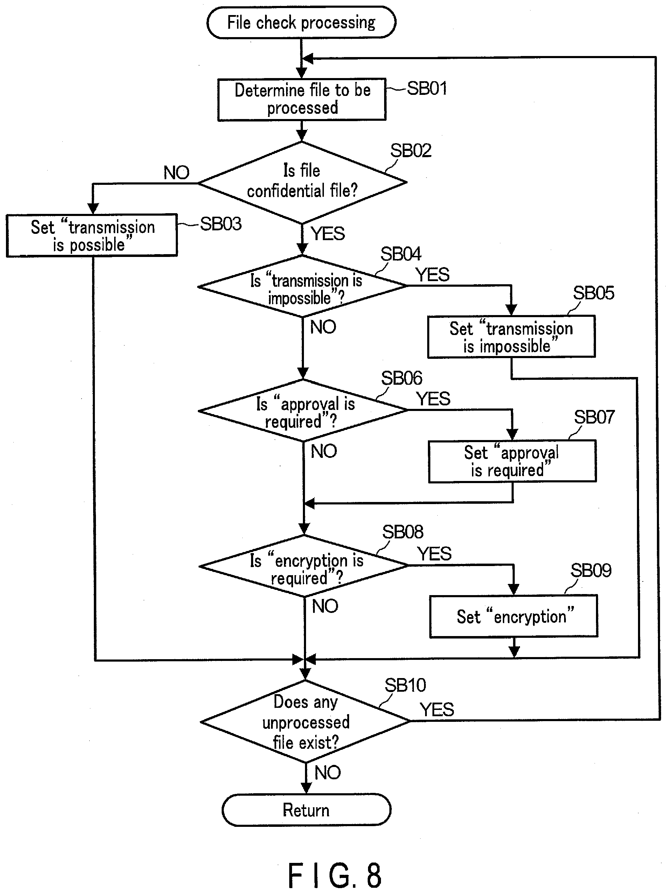

FIG. 8 is a flowchart illustrating a processing procedure of file check processing executed at Step SB with the controller 11 under the control of the confidentiality judgment section 115.

First, at Step SB01, the confidentiality judgment section 115 decides one of data files serving as the upload target and stored in the transmission/reception information storage 132, as the processed file. At this time, the confidentiality judgment section 115 secures a file determination register in the temporary storage 133 for each of data files serving as the upload target and stored in the transmission/reception information storage 132, and determines one data file that has not yet been determined as to whether the file is a confidential file from the data files, as the processed file.

Thereafter, at Step SB02, the confidentiality judgment section 115 decides whether the processed file is a confidential file, with reference to the rule table, which is the file rule table stored in the rule storage 131. This can be decided on the basis of whether the property information of the processed file matches with any of confidential properties of the confidential files provided in the rule table.

As a result of determination at Step SB02, if the processed file is not a confidential file, the confidentiality judgment section 115 sets, at Step SB03, a value indicating that transmission is possible, for example, the value "10", in the file determination register of the processed file stored in the temporary storage 133.

By contrast, as a result of determination at Step SB02, if the processed file is a confidential file, the confidentiality judgment section 115 decides, at Step SB04, whether "transmission is impossible" is provided as the confidentiality processing method for the confidential property of the rule table. The processed file may match with a plurality of confidential properties. Herein, the confidentiality judgment section 115 decides whether "transmission is impossible" is set as the confidentiality processing method for one of the confidential properties.

As a result of determination at Step SB04, if "transmission is impossible" is provided for any confidential property, the confidentiality judgment section 115 sets, at Step SB05, a value indicating that transmission is impossible, for example, the value "01", in the file determination register of the processed file stored in the temporary storage 133.

By contrast, as a result of determination at Step SB04, if "transmission is impossible" is not provided for any confidential property, the confidentiality judgment section 115 decides, at Step SB06, whether "approval is required" is provided for the confidential property of the rule table.

As a result of determination at Step SB06, if "approval is required" is provided for any confidential property, the confidentiality judgment section 115 sets, at Step SB07, a value indicating that approval is required, for example, the value "11", in the file determination register of the processed file stored in the temporary storage 133. In addition, the confidentiality judgment section 115 secures an approval destination register for each of approvers provided for the confidential property of the rule table in the temporary storage 133.

As a result of determination at Step SB06, if "approval is required" is not provided for any confidential property, or after the processing at Step SB07, the confidentiality judgment section 115 decides, at Step SB08, whether "encryption is required" is provided as the confidentiality processing method for the confidential profile of the rule table.

As a result of determination at Step SB08, if "encryption is required" is provided for any confidential property, the confidentiality judgment section 115 stores, at Step SB09, "encryption is required" as encryption setting in the file determination register of the processed file stored in the temporary stored 33.

As a result of determination at Step SB08, if "encryption is required" is not provided for any confidential property, or if setting for the processed file is executed in the file determination register at Step SB03, Step SB05, or Step SB09, the confidentiality judgment section 115 decides, at Step SB10, whether any unprocessed file that has not yet been decided as to whether the file is a confidential file exists in the file determination registers stored in the temporary storage 133. If any unprocessed file exists, the confidentiality judgment section 115 repeats the above processing from Step SB01 to set the value of the file determination register for the unprocessed file.

As a result of decision at Step SB10, if no unprocessed file exists, the confidentiality judgment section 115 ends the file check processing.

### (3) Transmission processing

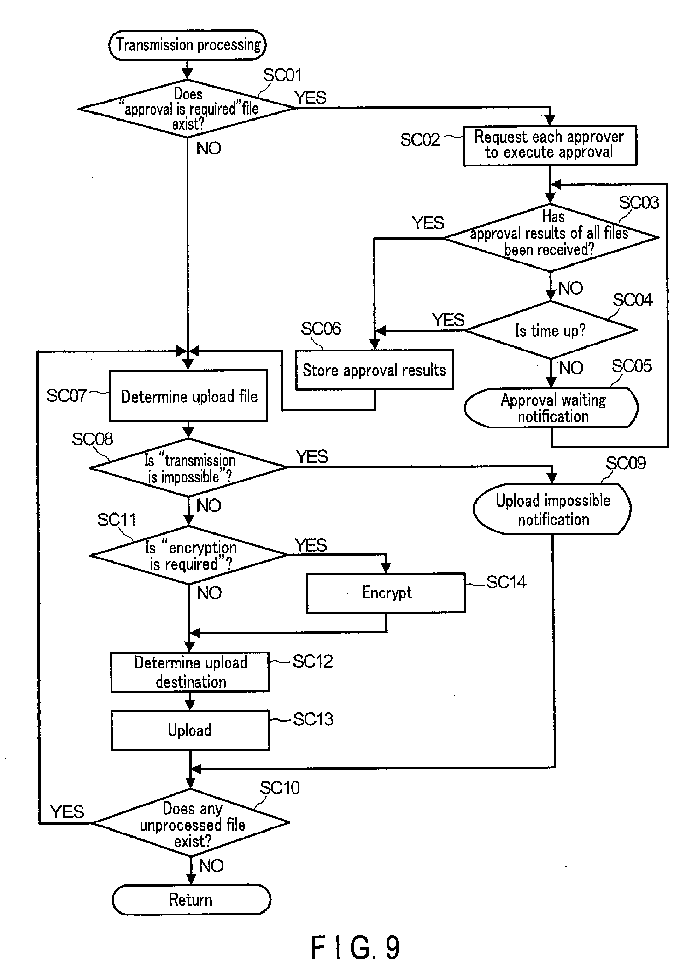

FIG. 9 is a flowchart illustrating a processing procedure of transmission processing executed at Step SC with the controller 11 under the control of the approval section 113, the transmission/reception control section 114, and the confidentiality section 116.

At Step SC01, the controller 11 of the edge server ES determines whether any data file requiring approval exists, with reference to file determination registers for the respective data files serving as the upload target and stored in the temporary storage 133, under the control of the approval section 113.

As a result of determination at Step SC01, if any data file requiring approval exists, the controller 11 executes processing of acquiring approver's approval of upload of the data file as follows, under the control of the approval section 113.

First, at Step SC02, the approval section 113 requests each approver to approve upload of the data file. Specifically, the approval section 113 transmits an approval request to the approver terminal AT corresponding to the approval destination ID of each approval destination register stored in the temporary storage 133, via the premises network NW2 by the communication I/F 15. The approval request can include file names of the individual data files to be uploaded. In this case, the data files to request approval may be different between the approvers. Each of the approvers can determine whether to permit or prohibit upload of each of the data files on the basis of these pieces of information included in the approval request displayed on the approver terminal AT. The approver individually executes determination for the data files, and sends approval results as responses. When the approval section 113 receives approval results from the approver terminals AT via the premises network NW2 by the communication I/F 15, the approval section 113 reflects the authentication results for each of the files on the values of the item "approved/not approved" of the approval destination registers.

At Step SC03, the approval section 113 determines whether approval results of all the files serving as the upload target have been received from all the approver terminals AT. As a result of determination at Step SC03, if approval results of all the files have not yet been received, the approval section 113 determines, at Step SC04, whether predetermined time as approval waiting time has passed, that is, whether the time is up. As a result of determination at Step SC04, if the time is not up, the approval section 113 transmits, at Step SC05, an approval waiting notification indicating that the approval section 113 is waiting for approver's approval of upload of the designated data file to the sender terminal ST serving as the upload instruction source with the communication I/F 15 via the premises network NW2. If the data file for which approval is being waited is set as the upload target with the edge server ES in accordance with the control program, the processing at Step SC05 may be skipped. Thereafter, the approval section 113 repeats the above processing from Step SC03.

As a result of determination at Step SC03, if approval results of all the data files requiring approval have been received, or if time is up as a result of determination at Step SC04, the approval section 113 stores, at Step SC06, the approval results in the file determination registers stored in the temporary storage 133, on the basis of the received approval results. In this operation, the approval result has a value indicating "approved" indicating that upload of the file is permitted, such as "1", if the value indicating "approved" is stored for the file in all the approval destination registers. However, if a value indicating "not approved" is stored for the file in any of the approval destination registers, the approval result of the file is maintained at a value indicating "not approved" indicating that upload of the file has not been approved, such as "0".

As a result of determination at Step SC01, if no data file requiring approval exists, or after the approval results are stored at Step SC06, the controller 11 determines, at Step SC07, one of the data files serving as the upload target and stored in the transmission/reception information storage 132, as the upload file serving as the target for which upload processing is actually executed, under the control of the transmission/reception control section 114.

Thereafter, at Step SC08, the controller 11 determines whether transmission of the upload file serving as the processing target is impossible, under the control of the transmission/reception control section 114. Whether transmission of the upload file is impossible can be determined by determining, for example, whether a value indicating that transmission is impossible, such as a value "01", is set in the file determination register for the data file stored in the temporary storage 133.

As a result of determination at Step SC08, if transmission of the upload file serving as the processing target is impossible, the controller 11 transmits, at Step SC09, an upload impossible notification indicating that upload of the designated data file has not been permitted, with the communication I/F 15 to the sender terminal ST serving as the upload instruction source via the premises network NW2, under the control of the transmission/reception control section 114. If the data file serving as the processing target is set as the upload target with the edge server ES in accordance with the control program, the processing at Step SC09 may be skipped.

Thereafter, at Step SC10, the controller 11 determines whether any unprocessed data file that has not yet been processed exists in the data files serving as the upload target and stored in the transmission/reception information storage 132. If any unprocessed data file exists, the controller 11 executes processing for the unprocessed data file by repeating the processing from Step SC07 described above.

By contrast, as a result of determination at Step SC08, if transmission of the upload file serving as the processing target is not impossible, the controller 11 determines, at Step SC11, whether the upload file serving as the processing target is a file requiring encryption, under the control of the transmission/reception control section 114. This can be determined by, for example, determining whether a value of "encryption is required" is stored in the file determination register for the data file stored in the temporary storage 133.

As a result of determination at Step SC11, if the upload file does not require encryption, the controller 11 determines, at Step SC12, the upload destination in which the upload file is to be stored, under the control of the transmission/reception control section 114. This can be discriminated, for example, on the basis of which of "transmission is possible" and "approval is required" is set in the file determination register for the data file stored in the temporary storage 133. Specifically, if "transmission is possible" is set, the data file is not a confidential file, and the transmission/reception control section 114 determines that the upload destination of the data file is the public data store FSO. By contrast, if "approval is required" is set, the data file is a confidential file, and the transmission/reception control section 114 determines that the upload destination of the data file is the private data store FSS.

Thereafter, at Step SC13, the controller 11 uploads the data file stored in the transmission/reception information storage 132 to the center server SS via the communication I/F 14, with the upload destination designated, under the control of the transmission/reception control section 114. In this operation, the controller 11 may transmit an upload completion notification indicating that upload of the designated data file has been completed to the sender terminal ST being the upload instruction source via the premises network NW2 with the communication I/F 15, under the control of the transmission control section 114. Thereafter, the controller 11 proceeds to Step SC10 described above, and checks whether any unprocessed data file exists.

In addition, as a result of determination at Step SC11, if the data file is a file requiring encryption, at Step SC14, the controller 11 reads the data file serving as the upload file being the processing target from the transmission/reception information storage 132, and subjects the read data file to encryption processing, under the control of the confidentiality section 116. The confidentiality section 116 overwrites the data file with the encrypted data file as the data file serving as the upload target in the transmission/reception information storage 132. Thereafter, the controller 11 proceeds to the Step SC12 and further Step SC13 described above to upload the encrypted data file stored in the transmission/reception information storage 132 to the center server SS, with the upload destination designated, under the control of the transmission/reception control section 114.

As described above, if processing is finished for all the data files serving as the upload target and stored in the transmission/reception information storage 132, the controller 11 determines that no unprocessed file exists as a result of determination at Step SC10, and ends the transmission processing. When the transmission processing is ended, the controller 11 may delete the data file serving as the upload target and stored in the transmission/reception information storage 132 and information, such as the transmission determination register, stored in the temporary storage 133 and relating to the data file being the upload target.

### (Operations and Effects)

As described above, the edge server ES serving as the communication control apparatus according to the first embodiment of the present invention has a structure in which the rule acquisition section 111 downloads and acquires, from the center server SS, the approval rule by the approver of upload in upload of the data file to the center server SS via the wide area network NW1, the approval section 113 acquires approval of upload of the data file from the approver in accordance with the approval rule acquired with the rule acquisition section 111, when any data file is uploaded to the center server SS, and the transmission/reception control section 114 uploads the data file to the center server SS on condition that the approval section 113 has acquired approval of upload of the data file from the approver. As described above, the edge server ES according to the first embodiment is configured to download the approval rule from the center server SS in advance, have the approver verify whether the data file can be uploaded, in accordance with the approval rule, when the data file is to be uploaded to the center server SS, and upload the data file after acquiring approval from the approver. This structure reduces possibility of inappropriate upload of a data file including information with disclosure restriction to the center server SS of the head office HO.

In addition, the edge server SS according to the first embodiment has a structure in which the rule acquisition section 111 acquires the approval rule corresponding to the edge server ES thereof from approval rules corresponding to respective edge servers stored in the center server SS. This structure enables unified centralization of the approval rules on the center server SS side. In addition, the approval rule is not prepared or changed on the edge server ES side, and this structure prevents setting of an erroneous approval rule by the manager of the edge server ES who lacks understanding of the approval rule.

The approval rule includes approvers corresponding to the confidential properties of the data file, and the edge server ES according to the first embodiment has a structure in which the approval section 113 determines whether the data file to be uploaded matches with any one of confidential properties in the approval rule and, if the data file matches, acquires approval from the approver corresponding to the confidential property. This structure enables determination as to whether approval is required by comparing the file property with the confidential property. The file property, such as the extension and the file name of the file, enables determination of the data contents of the file, without reading the data contents of the data file. This structure enables determination in short time. In addition, no approver's approval is acquired for a data file that does not match with any of confidential properties in the approval rule. With this structure, it suffices to acquire approval only for data files requiring approval on the basis of the approval rule, instead of acquiring approval from the approver unconditionally whenever any data file exists. This structure avoids occurrence of wasted processing time and waiting time, and enables shortening of the processing time required until upload is finished. This structure also removes causing the approver to execute unnecessary approval work.

In addition, the approval rule includes a rule relating to the confidentiality processing method for the data file, and the edge server ES according to the first embodiment has a structure in which the confidentiality judgment section 115 judges whether the data file requires confidentiality on the basis of whether the approval rule for the data file includes the confidentiality processing method for the data file, when the data file is uploaded to the center server, and the confidentiality section 116 executes confidentiality processing based on the confidentiality processing method included in the approval rule, if the confidentiality judgment section 115 judges that confidentiality is required, for the data file for which approval of upload has been acquired from the approver. This structure further reduces the risk of leakage of the data file including the information with disclosure restriction by subjecting the data file to confidentiality processing, as required, before transmission, in addition to approver's approval of transmission.

The confidentiality processing method for the data file can include either of encryption of the data file and prohibition of transmission of the data file.

In addition, in the edge server ES according to the first embodiment, the approval rule includes specification information specifying the approver who should execute approval of upload of the data file, and the approval section 113 specifies the approver from whom approval should be acquired on the basis of the specification information included in the approval rule and acquires approval of upload of the data file from the specified approver. This structure enables acquisition of approval of transmission from a proper approver corresponding to the data file, and further reduction in possibility of erroneous transmission of the data file including the information with disclosure restriction.

### <Second Embodiment>

The communication controller according to the first embodiment has a structure of deciding the confidential file that the propriety of transmission is to be inquired of the approver, without verifying the data content. By contrast, a communication controller according to a second embodiment of the present invention is configured to decide whether the data file is a confidential file with reference to the data content of the data file.

### (Configuration Example)

The software configuration and the hardware configuration of an edge server ES as the communication controller according to the second embodiment of the present invention are similar to those of the first embodiment.

However, the second embodiment is different from the first embodiment in the rule table downloaded from center server SS and stored in the rule storage 131, and the file determination register for each file ID stored in the temporary storage 133. In addition, according to the present embodiment, a confidentiality item register is stored for each file ID in the temporary storage 133.

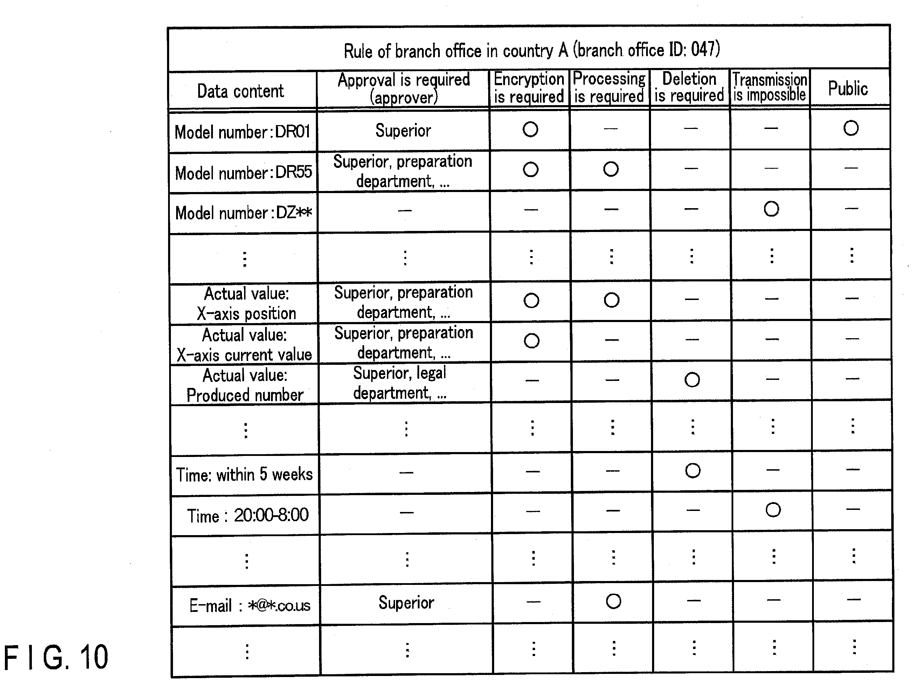

FIG. 10 is a diagram illustrating an example of a data rule table as the rule table. In the second embodiment, the data rule table stores approval rules corresponding to the data content of the data files. Specifically, in the second embodiment, the file rule table includes items "processing is required", "deletion is required", and "public", in addition to the items "approval is required", "encryption is required", and "transmission is impossible" in the same manner as the file rule table in the first embodiment, and provides them in association with the data content of the confidential file with disclosure restriction.

Herein, the data content can be a term and/or a numerical value used in the data indicating that the data is confidential data. For example, in a data file of IoT data prepared with the robot controller RC and the like, a specific character string is included in the data content as model number of the manufacturing equipment RB. In addition, in a sales data file prepared in the sender terminal ST and/or the approver terminal AT, characters and symbols, such as "ten thousand yen" and the symbol of yen "¥", are included in the data content.

The items "processing is required" and "deletion is required" also provide the confidentiality processing method for the data file, in the same manner as the items "encryption is required" and "transmission is impossible". The item "processing is required" describes a value indicating that processing, such as abstraction, is required for the data content in upload of the data file, if the processing is required, in the case where the confidential data content exist in the data content of the file. The item "deletion is required" describes a value indicating that deletion of the data content is required in upload of the data file, if the deletion is required, in the case where the confidential data content exist in the data content of the file.

If the storage destination of the data file in the head office HO is the public data store FSO, the item "public" shows a value indicating it, as storage destination information designating the storage destination of the data file in the center server SS.

FIG. 10 illustrates an example of a data rule table for the branch office BOA in country A with the branch office ID "47". For example, for the model number "DR01" serving as a data content of a confidential file, the data rule table shows that approver's approval is required, and the storage destination is the public data store FSO. In addition, the file rule table illustrates that approver's approval is required for the actual value "X-axis position" as the data content of the confidential file, shows the approver "preparer's superior, approver of the preparation department of the data file, and the like", and shows a value indicating that processing is required. The file rule table shows a value indicating that transmission of a message including a data file is impossible for the preparation time "20:00 to 8:00 on the next day" as the data content of the confidential file. In addition, for example, for the e-mail address "*@*.co.us" serving as a data content of a confidential file, the file rule table shows that approver's approval is required, the approver is "preparer's superior", and shows a value indicating that processing is required. The sign "*" indicates a desired character string.

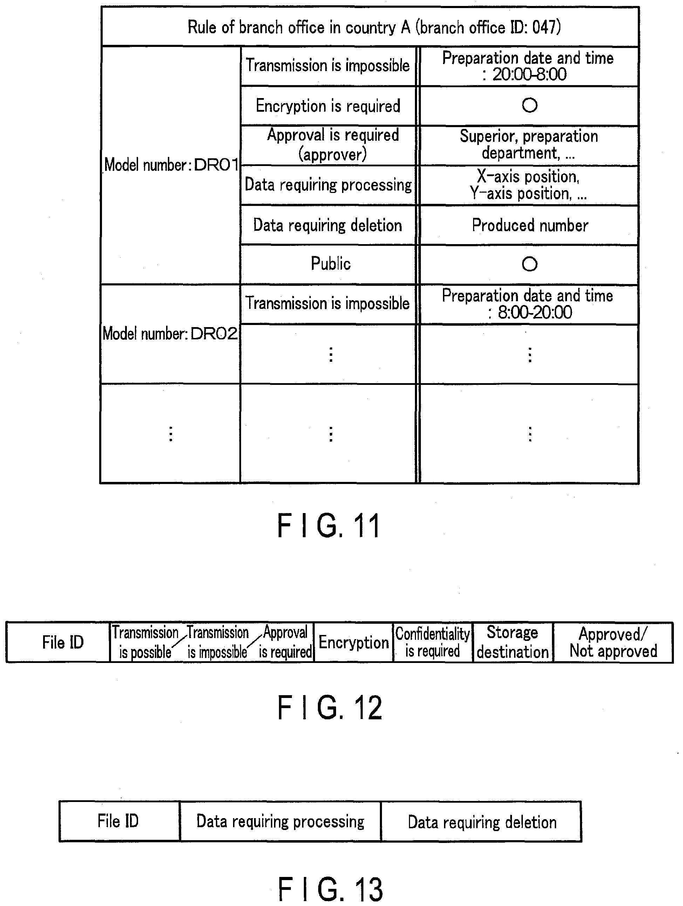

FIG. 11 is a diagram illustrating another example of the data rule table as the rule table. This is an example of a data rule table storing data contents for a plurality of approval rules associated with one data content. In the data rule table as illustrated in FIG. 10, it is required to determine whether the data content of the data file matches with each of all of a plurality of data contents illustrated in the table one by one. By contrast, with the data rule table of FIG. 11, if it is determined that one data content matches, the other data contents requiring determination can be immediately discriminated, and the speed of processing can be increased.

FIG. 11 illustrates an example of the file rule table for the branch office BOA in country A with the branch office ID "47", and shows, for example, the preparation time "20:00 to 8:00 on the next day" as the data content of "transmission is impossible" for the model number "DR01" serving as the data content of the confidential file. In addition, the file rule table illustrates that, for example, encryption is required, approver's approval is required, and the approver is "preparer' superior, approver of the preparation department of the file, and the like", for the model number "DR01". The file rule table also shows, for example, "X-axis position, Y-axis position, and the like" as the data content requiring processing, and "produced number" as the data content requiring deletion, for the model number "DR01". The file rule table also shows that the preparation destination is the public data store FSO for the model number "DR01".

FIG. 12 is a diagram illustrating an example of the file determination register stored for each data file serving as the upload target in the temporary storage 133. The file determination register stores information "transmission is possible/transmission is impossible/approval is required", information indicating whether encryption is required, and information indicating "approved/not approved", in association with the file ID to discriminate each data file, such as the file name, in the same manner as the first embodiment. In addition, in the second embodiment, the file determination register further stores information indicating whether confidentiality is required and information indicating the storage destination of the uploaded data file in association with the file ID. The information indicating whether confidentiality is required can also be stored as, for example, a 1-bit flag. The 1-bit flag indicates whether confidentiality is required in upload of the data file, for example, the flag value "0" indicating that confidentiality is not required is set as the initial value, and the flag value "1" indicates that confidentiality is required. In the same manner, the information indicating the storage destination can also be stored as, for example, a 1-bit flag. The 1-bit flag indicates whether the storage destination of the data file uploaded to the center server SS is the public data store FSO, for example, the flag value "0" indicating that the storage destination is the private data store FSS is set as the initial value, and the flag value "1" indicates that storage destination is the public data store FSO.

FIG. 13 is a diagram illustrating an example of a confidentiality item register stored for each data file serving as the upload target in the temporary storage 133. The confidentiality item register stores information indicating data requiring processing and data requiring deletion in association with the file ID. The information indicating data requiring processing is information specifying the data content decided as data requiring processing in the data file on the basis of the data rule table. In the same manner, information indicating data requiring deletion is information specifying the data content decided as data requiring deletion in the data file on the basis of the data rule table.

The confidentiality judgment section 115 of the controller 11 decides whether each of data contents of the data file serving as the upload target matches with any of data contents in the approval rules stored in the rule storage 131 and decides, if the data content matches, that the data file requires approver's approval.

In addition, the confidentiality judgment section 115 executes processing of deciding whether confidentiality is required for the data content of the data file on the basis of the approval rules stored in the rule storage 131, for the data file serving as the upload target. For example, if the confidentiality judgment section 115 decides that the data content matches with any of data contents of the data file in the data rule table stored in the rule storage 131, the confidentiality judgment section 115 determines the confidentiality processing method stored in accordance with the data content. If "encryption is required" is set as the confidentiality processing method, the confidentiality judgment section 115 can decide that the data file requires encryption. If "transmission is impossible" is set as the confidentiality processing method, the confidentiality judgment section 115 can decide that transmission of the data file is prohibited. If "processing is required" is set as the confidentiality processing method, the confidentiality judgment section 115 can decide that the data content part in the data file requires processing. The confidentiality judgment section 115 registers information indicating the data content part decided as part requiring processing in the confidentiality item register of the temporary storage 133. In the same manner, if "deletion is required" is set as the confidentiality processing method, the confidentiality judgment section 115 can decide that the corresponding data content part in the data file requires deletion. The confidentiality judgment section 115 registers information indicating the data content part decided as part requiring deletion in the confidentiality item register of the temporary storage 133.

In addition, the transmission/reception control section 114 of the controller 11 executes processing of determining whether the storage destination of the data file stored in the transmission/reception information storage 132 is the public data store FSO, on the basis of the approval rule stored in the rule storage 131, for the data file serving as the upload target. The transmission/reception control section 114 executes processing of designating the determined storage destination, and transmitting the data file to the center server SS of the head office HO from the communication I/F 14 .

### (Operation Example)

The following is an explanation of an operation example of the edge server ES configured as described above.

The operations of the edge server ES according to the second embodiment are the same as the operations of the edge server ES according to the first embodiment, except the file check processing at Step SB and the transmission processing at Step SC.

The following is an explanation of the file check processing and the transmission processing according to the second embodiment.

### (1) File check processing

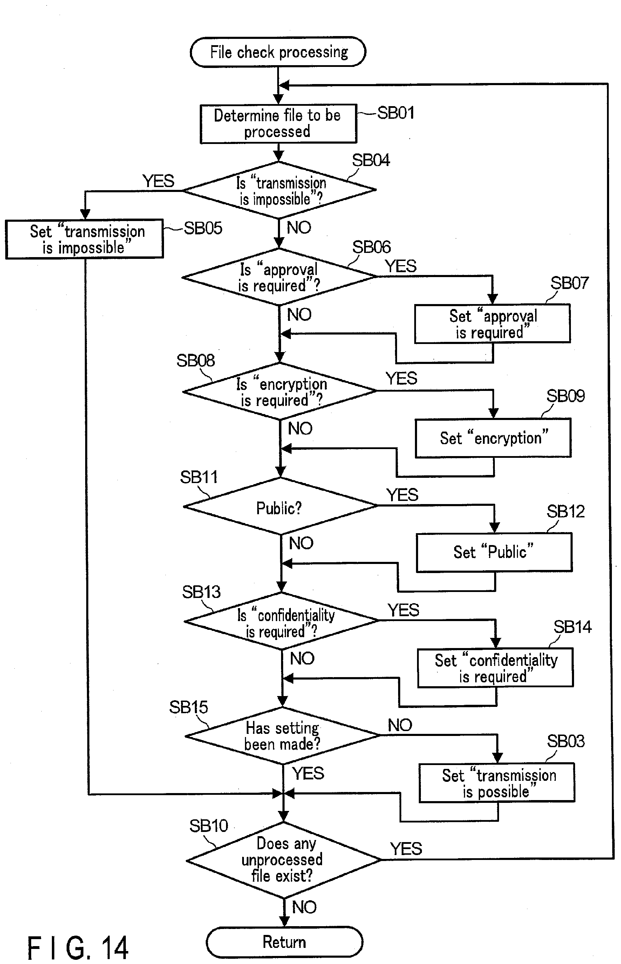

FIG. 14 is a flowchart illustrating a processing procedure of file check processing executed at Step SB with the controller 11 under the control of the confidentiality judgment section 115.

First, at Step SB01, the confidentiality judgment section 115 decides one of the data files stored in the transmission/reception information storage 132 and serving as the upload target, as the processed file. In this operation, the confidentiality judgment section 115 secures a file determination register in the temporary storage 133 for each of the data files stored in the transmission/reception information storage 132 and serving as the upload target, and determines one data file that has not yet been determined as to whether the file is a confidential file from the data files, as the processed file.

Thereafter, at Step SB04, the confidentiality judgment section 115 decides whether transmission of the processed file is impossible, with reference to the rule table serving as the data rule table stored in the rule storage 131. This can be decided by deciding whether the data content of the processed file includes a part matching with any of data contents for which "transmission is impossible" is set as the confidentiality processing method in the rule table.

As a result of decision at Step SB04, if transmission is impossible, the confidentiality judgment section 115 sets, at Step SB05, a value indicating that transmission is impossible, for example, the value "01", in the file determination register of the processed file stored in the temporary storage 133.

By contrast, as a result of decision at Step SB04, if transmission is not impossible, the confidentiality judgment section 115 decides, at Step SB06, whether approval is required for the processed file. This can be decided by deciding whether the data content of the processed file includes a part matching with any of data contents provided with the approver in the rule table.

As a result of decision at Step SB06, if approval is required, the confidentiality judgment section 115 sets, at Step SB07, a value indicating that approval is required, for example, the value "11", in the file determination register of the processed file stored in the temporary storage 133. In addition, the confidentiality judgment section 115 secures an approval destination register for each of approvers provided for the data content of the file rule table in the temporary storage 133.

As a result of decision at Step SB06, if approval is not required, or after the processing at Step SB07, the confidentiality judgment section 115 decides, at Step SB08, whether encryption is required for the processed file. This can be decided by deciding whether the data content of the processed file includes a part matching with any of data contents set as "data requiring encryption" in the rule table.

As a result of judgment at Step SB08, if encryption is required, the confidentiality judgment section 115 stores, at Step SB09, a value indicating that encryption is required as encryption setting in the file determination register for the processed file stored in the temporary storage 133.

As a result of judgment at Step SB08, if encryption is not required, or after the processing at Step SB09, the confidentiality judgment section 115 decides, at Step SC11, whether the storage destination of the processed file is the public data store FSO. This can be decided on the basis of whether the data content of the processed file includes a part matching with any of the data contents set in the rule table as data contents the storage destination of which is the public data store FSO.

As a result of judgment at Step SB11, if the storage destination of the processing file is the public data store FSO, the confidentiality judgment section 115 stores, at Step SB12, information indicating the public data store FSO as the storage destination in the file determination register of the processed file stored in the temporary storage 133.

As a result of decision at Step SB11, if the storage destination of the processing file is not the public data store FSO, or after the processing at Step SB12, the confidentiality judgment section 115 judges, at Step SB13, whether the processed file requires confidentiality. This can be judged by deciding whether the data content of the processed file includes a part matching with any of data contents provided as "processing is required" or "deletion is required" in the rule table.

As a result of determination at Step SB13, if processing is required, the confidentiality judgment section 115 stores, at Step SB14, a value indicating that confidentiality is required in the file determination register of the processed file stored in the temporary stored 33. In addition, the confidentiality judgment section 115 secures a confidentiality item register of the processed file in the temporary storage 133. Thereafter, if "processing is required" is set in the data content of the rule table decided as matching data content in the decision processing at Step SB13, the confidentiality judgment section 115 registers information indicating the data content part of the data requiring processing in the processed file in the confidentiality item register. In addition, in the decision processing at Step SB13, if "deletion is required" is set in the data content of the rule table decided as matching data content, the confidentiality judgment section 115 registers information indicating the data content part of the data requiring deletion in the processed file in the confidentiality item register.

As a result of decision at Step SB13 if confidentiality is not required, or after the processing at Step SB14 the confidentiality judgment section 115 decides, at Step SB15 whether "approval is required", "encryption is required", or "confidentiality is required" has been set in the file determination register of the processed file stored in the temporary storage 133.

As a result of decision at Step SB15 if none of "approval is required", "encryption is required", and "confidentiality is required" has been set in the file determination register, the confidentiality judgment section 115 sets, at Step SB03, a value indicating that transmission is possible, for example, "10", in the file determination register.

Thereafter, or as a result of decision at Step SB15, when either of "approval is required", "encryption is required", and "confidentiality is required" has been set in the file determination register, the confidentiality judgment section 115 decides, at Step SB10, whether any unprocessed file that has not yet been decided as to whether the file is a confidential file exists in the file determination registers stored in the temporary storage 133. If any unprocessed file exists, the confidentiality judgment section 115 repeats the above processing from Step SB01 to set the value of the file determination register for the unprocessed file.

As a result of decision at Step SB10, if no unprocessed file exists, the confidentiality judgment section 115 ends the file check processing.

### (2) Transmission processing

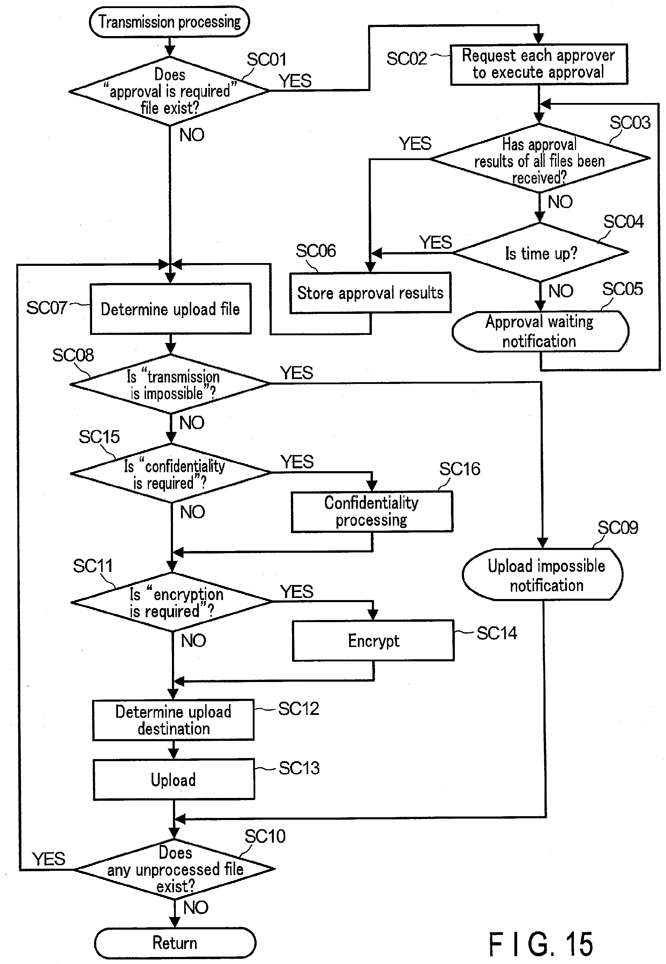

FIG. 15 is a flowchart illustrating a processing procedure of transmission processing executed at Step SC with the controller 11 under the control of the approval section 113 and the transmission/reception control section 114.

The processing from Step SC01 to Step SC12 are similar to those of the first embodiment.

As a result of decision at Step SC08, if the upload file serving as the processing target is not the destination of "transmission is impossible", the controller 11 decides, at Step SC15, whether the upload file serving as the processing target is a file requiring confidentiality, under the control of the transmission/reception control section 114. This can be executed by deciding whether "confidentiality is required" is stored in the file determination register for the data file stored in the temporary storage 133.

As a result of determination at Step SC15, the upload file is a file of "confidentiality is required", the controller 11 executes, at Step SC16, confidentiality processing for the data content of the upload file, under the control of the confidentiality section 116. In this operation, the confidentiality section 116 executes processing, such as abstraction, for the data content part requiring processing in the data file, with reference to the confidentiality item register of the data file stored in the temporary storage 133. The confidentiality section 116 also deletes the data content part of the data file requiring deletion, with reference to the confidentiality item register.

Thereafter, or as a result of decision at Step SC16, if the upload file is not a file of "confidentiality is required", the controller 11 proceeds to Step SC11. The processing at Step SC11 to Step SC14 is the same as that of the first embodiment. However, with respect to the upload destination determination processing at Step SC12, while the upload destination is determined in the first embodiment on the basis of the information "transmission is possible" and "approval is required" in the file determination register for the data file stored in the temporary storage 133, the upload destination is determined in the second embodiment on the basis of the storage destination of the file determination register. Specifically, the controller 11 determines that the upload destination is the public data store FSO, if information indicating the public data store FSO is stored as the storage destination in the file determination register, under the control of the transmission/reception control section 214. In addition, the controller 11 determines that the upload destination is the private data store FSS, if information indicating the private data store FSS is stored as the storage destination in the file determination register, under the control of the transmission/reception control section 214.

### (Operations and Effects)

As described above, the edge server ES serving as the communication control apparatus according to the second embodiment of the present invention has a structure in which the approval rule includes approvers corresponding to the data contents of the data file, the approval section 113 determines whether the data content of the data file to be uploaded matches with any of data contents in the approval rule and, if the data content matches, acquires approval from the approver corresponding to the data content. As described above, this structure decides whether the data file is a confidential file requiring approver's approval by checking the data content of the data file. Therefore, this structure further reduces the possibility of erroneous upload of a data file including information with disclosure restriction for the destination, in comparison with the case in which the data content is not checked. This structure also enables reduction in probability of causing the approver to approve a file requiring no approval.

In addition, the approval rule includes a rule relating to the confidentiality processing method for the data content of the data file, and the edge server ES according to the second embodiment has a structure in which the confidentiality judgment section 115 judges whether the data file requires confidentiality on the basis of whether the approval rule includes the confidentiality processing method for the data content for the data file, when the data file is uploaded to the center server, and the confidentiality section 116 executes confidentiality processing based on the confidentiality processing method for the data content included in the approval rule, if the confidentiality judgment section 115 judges that confidentiality is required, for the data file for which approval of upload has been acquired from the approver. With this structure, in addition to approval of transmission by the approver, confidentiality processing is executed for the data content of the data file as required and thereafter the data file is transmitted. This structure further reduces the risk of inappropriate upload of the data file including the data content with disclosure restriction.

The confidentiality processing method for the data content of the data file can include one of encryption of the data file, processing or deletion of the data content of the data file, and prohibition of transmission of the data file. As described above, the confidentiality processing method for the data file includes processing or deletion of the data content of the data file. As described above, this structure enables processing or deletion of part of the data content, as required, by checking the data content of the data file. The data files include data including part that cannot be taken out from the country and/or the region to the other countries and/or regions, that is, cannot be disclosed the other countries and/or regions, although it is useful data for various uses, such as IoT data prepared with the robot controller RC and the like. If upload itself of a data file including such a data content that cannot be disclosed is prohibited, the data cannot be stored in the center server SS and is kept idle without being used for analysis based on the data and the like.

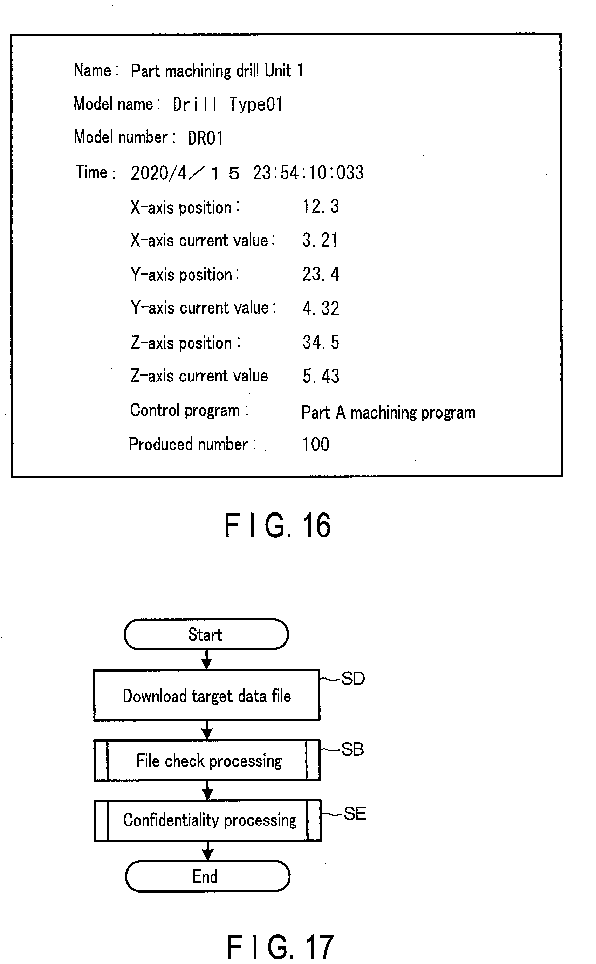

IoT data is data of Key-Value form, and includes information (such as property of the machine) associated with the machine itself and time-series data. For example, FIG. 16 is a diagram illustrating IoT data as an example of the data file. In such IoT data, it can be provided whether the data is confidential according to the output source machine. For example, data relating to a specific machine tool is confidential, and data of a machine of a specific manufacturer is confidential. In addition, it can be provided whether the data is confidential according to which part of the data model of the IoT data the data corresponds to. For example, data corresponding to parameters of the machine is confidential, and specific actual values (such as coordinate positions of the X-axis and the Y-axis) included in the machine actual values are confidential. In addition, it can be provided whether the data is confidential according to the time axis. For example, data of a specific time zone is confidential.

In addition, in some countries and/or regions, there are cases where the laws and ordinances not only prohibit taking of personal information, such as e-mail addresses, out of the country and/or region to the other countries and/or regions, but also provide limited disclosure of personal information even in the country and/or region.

As described above, various rules are provided in the data rule table, in accordance with the confidential policy of the country and/or region in which the communication control apparatus is located. For example, the various rules include a rule that information corresponding to a specific model number requires approval, and a rule that transmission of information of the produced number is impossible. This structure enables upload of data to the center server SS, excluding data taking of which to the outside of the country is prohibited and/or data content not requiring actual data, such as the actual number. This structure enables collection of various data files in the center server SS and effective use of data.

In the edge server ES according to the second embodiment of the present invention, the approval rule includes storage destination information designating the storage destination in the center server SS for the data file, and the transmission/reception control section 114 designates the storage destination based on the storage destination information included in the approval rule and uploads the data file to the center server SS. This structure enables distribution of data to the storage destinations in accordance with the data contents. In addition, this structure enables storage of the data file as an open data file in the public data store FSO, on the premise that part of the data content is processed or deleted as required.

### <Third Embodiment>

The communication control apparatuses according to the first and the second embodiments provide a communication control function used in upload of a data file to the center server SS, but communication control may be executed also when a data file is downloaded from the center server SS.

The following is an explanation of an example serving as a third embodiment of the present invention, in which a communication control function used in download is added to the communication control apparatus according to the second embodiment. As a matter of course, the communication control function in download can be added to the communication control apparatus according to the first embodiment in the same manner.

### (Configuration Example)

Software configuration and hardware configuration of an edge server ES serving as a communication control apparatus according to the third embodiment of the present invention are similar to those of the second embodiment.

### (Operation Example)

### (1) Download of data file

The controller 11 of the edge server ES determines whether download of a data file is required and, if download is required, can execute the following download control, under the control of the transmission/reception information acquisition section 112. The transmission/reception information acquisition section 112 determines that download is required, for example, when transmission/reception information acquisition section 112 receives, via the communication I/F 15, a download instruction designating a data file serving as a download target from the sender terminal ST via the premises network NW2. In addition, the transmission/reception information acquisition section 112 determines that download of a predetermined data file from the center server SS is required regularly or at desired point in time, in accordance with a control program. The predetermined data file is stored in the private data store FSS or the public data store FSO of the head office HO.

FIG. 17 is a flowchart illustrating a processing procedure of data file download control executed with the controller 11 of the edge server ES.

At Step SD, the controller 11 downloads a data file serving as the download target, under the control of the transmission/reception information acquisition section 112. Specifically, the transmission/reception information acquisition section 112 downloads a data file designated with the sender terminal ST or a predetermined data file, stored in the private data store FSS or the public data storage FSO of the head office HO, with the communication I/F 14 via the wide area network NW1. The transmission/reception information acquisition section 112 stores the downloaded data file in the transmission/reception information storage 132 of the data storage 13. A plurality of files serving as the download target may exist.

Thereafter, at Step SB, the controller 11 executes file check processing for the data file stored in the transmission/reception information storage 132, on the basis of the rule defined in the rule table stored in the rule storage 131, under the control of the confidentiality judgment section 115. The file check processing is similar to that executed in upload and explained in the second embodiment, except that the data file stored in the transmission/reception information storage 132 and serving as the check target is a file to be uploaded or a downloaded file.

Thereafter, at Step SE, the controller 11 executes confidentiality processing of storing the data file in accordance with a file check result at Step SB described above, under the control of the approval section 113, the transmission/reception control section 114, and the confidentiality section 116.

### (2) Confidentiality processing

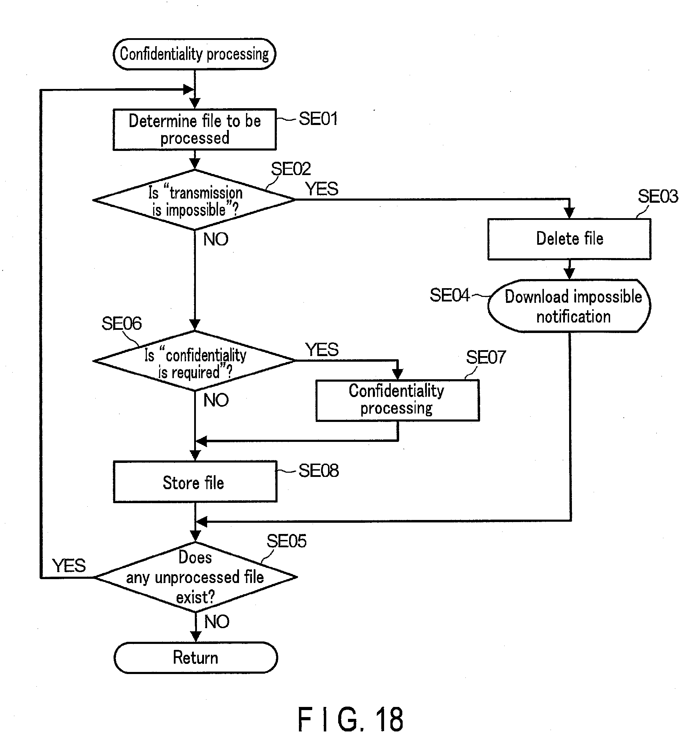

FIG. 18 is a flowchart illustrating a processing procedure of confidentiality processing executed at Step SE with the controller 11 under the control of the transmission/reception control section 114 and the confidentiality section 116.

At Step SE01, the controller 11 of the edge server ES determines one of downloaded data files stored in the transmission/reception information storage 132, as a data file serving as the processing target, under the control of the transmission/reception control section 114.

Thereafter, at Step SE02, the controller 11 determines whether transmission of the data file serving as the processing target is impossible, under the control of the transmission/reception control section 114. Whether transmission of the data file is impossible can be determined by determining, for example, whether a value indicating that transmission is impossible, such as a value "01", is set in the file determination register for the data file stored in the temporary storage 133.

As a result of determination at Step SE02, if transmission of the data file serving as the processing target is impossible, the controller 11 deletes, at Step SE03, the data file stored in the transmission/reception information storage 132, under the control of the transmission/reception control section 114.

Thereafter, at Step SE04, the controller 11 transmits a download impossible notification indicating that download of the designated data file has not been permitted, with the communication I/F 15 to the sender terminal ST serving as the download instruction source via the premises network NW2, under the control of the transmission/reception control section 114. If the data file serving as the processing target has been downloaded with the edge server ES in accordance with the control program, the processing at Step SE04 may be skipped.

Thereafter, at Step SE05, the controller 11 determines whether any unprocessed data file that has not yet been processed exists in the downloaded data files stored in the transmission/reception information storage 132. If any unprocessed data file exists, the controller 11 executes processing for the unprocessed data file by repeating the processing from Step SE01 described above.

By contrast, as a result of determination at Step SE02, if transmission of the data file serving as the processing target is not impossible, the controller 11 determines, at Step SE06, whether the data file serving as the processing target is a file requiring confidentiality, under the control of the transmission/reception control section 114. This can be determined by, for example, determining whether a value of "confidentiality is required" is stored in the file determination register for the data file stored in the temporary storage 133.

As a result of determination at Step SE06, if the data file is a file requiring confidentiality, the controller 11 executes, at Step SE07, confidentiality processing for the data content of the data file, under the control of the confidentiality section 116. In this operation, the confidentiality section 116 executes processing, such as abstraction, for the data content part requiring processing of the data file, with reference to the confidentiality item register of the data file stored in the temporary storage 133. The confidentiality section 116 also deletes the data content part of the data file requiring deletion, with reference to the confidentiality item register.

Thereafter, or as a result of determination at Step SE06, if the data file serving as the processing target is not a file requiring confidentiality, the controller 11 stores, at Step SE08, the data file under the control of the transmission/reception control section 114. In storage of the data file, the transmission/reception control section 114 transmits the data file to the sender terminal ST serving as the download instruction source with the communication I/F 15 via the premises network NW2. In this manner, the sender terminal ST can store the data file in the data storage included in the sender terminal ST, or store the data file in the local data store DS from the sender terminal ST. If the data file serving as the processing target has been downloaded with the edge server ES in accordance with the control program, the transmission/reception control section 114 stores the data file in the local data store DS with the communication I/F 15 via the premises network NW2.

Thereafter, the controller 11 proceeds to processing at Step SE05.

As described above, if processing is finished for all the data files downloaded from the center server SS and stored in the transmission/reception information storage 132, the controller 11 determines that no unprocessed file exists as a result of determination at Step SE05, and ends the confidentiality processing. When the confidentiality processing is ended, the controller 11 may delete the downloaded data files stored in the transmission/reception information storage 132 and information, such as the transmission determination registers, stored in the temporary storage 133 and relating to the data files.

### (Operations and Effects)

As described above, the edge server ES serving as the communication control apparatus according to the third embodiment of the present invention has a structure in which, when a data file is downloaded from the center server SS, the confidentiality judgment section 115 judges whether the data file requires confidentiality on the basis of whether the approval rule includes the confidentiality processing method for the data content for the data file, and the confidentiality section 116 executes confidentiality processing for the downloaded data file on the basis of the confidentiality processing method for the data content included in the approval rule, if the confidentiality judgment section 115 judges that confidentiality of the data content is required.

Herein, the confidentiality processing method for the data content of the data file can include at least one of deletion of the downloaded data file and processing or deletion of the data content of the data file.

This structure enables confidentiality of data content of a downloaded data file as required when the data file is downloaded, as well as an uploaded data file.

### <Fourth Embodiment>

The communication control apparatuses according to the first to the third embodiments are edge servers ES, but the communication control apparatus may be achieved with another information processing apparatus in the branch office.

For example, the communication control apparatus may be a sender terminal ST designating a data file serving as an upload target, and the sender terminal ST can request the approver of the designated data file to execute approval, and execute confidentiality processing.

### (Configuration Example)

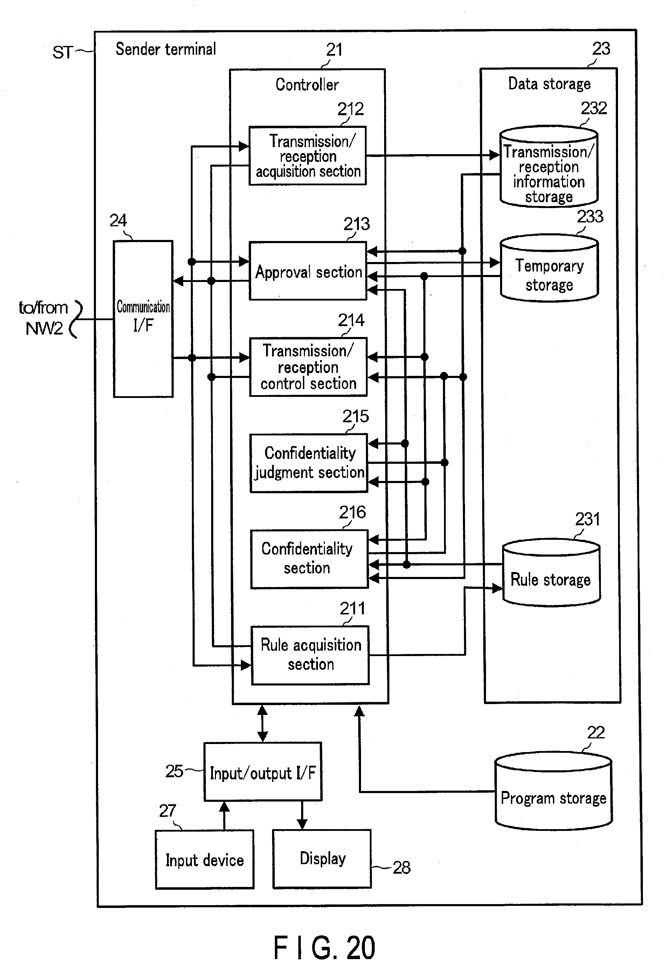

FIG. 20 and FIG. 21 are block diagrams illustrating hardware configuration and software configuration of the sender terminal ST serving as the communication control apparatus according to the fourth embodiment of the present invention.

The sender terminal ST can be formed of, for example, a personal computer. The sender terminal ST includes a controller 21 including a hardware processor, and has a structure of connecting a program storage 22, a data storage 23, a communication I/F 24, and an input/output interface (hereinafter referred to as "input/output I/F") 25 to the controller 21 via a bus 26.

The communication I/F 24 includes a communication unit executing data communication with the premises network NW2 in accordance with a communication protocol defined with the premises network NW2. The communication I/F 24 downloads the rule table LT from the center server SS via the premises network NW2 and the edge server ES, under the control of the controller 21. In addition, the communication I/F 24 transmits an approval request to the approver terminal AT or the like, receives an approval result, writes a data file to the local data store DS, and reads the data file therefrom, via the premises network NW2, under the control of the controller 21.

The input/output I/F 25 is connected to an input device 27 and a display 28. The input device 27 and the display 28 are used to input various instructions to the controller 21 by, for example, the sender using the sender terminal ST, and display various types of information in accordance with control processing executed with the controller 21.

The program storage 22 uses, for example, a nonvolatile memory capable of executing writing and reading at any time, such as an HDD or an SSD, as the main storage medium. A storage area of the memory stores a program to execute various types of processing according to the fourth embodiment, in addition to middleware, such as an OS. The storage medium may be formed of a combination of the HDD or the SSD and a ROM.

The data storage 23 is formed of, for example, a combination of an HDD or an SSD and a RAM, and includes a storage area provided with a rule storage 231, a transmission/reception information storage 232, and a temporary storage 233 and the like used in the fourth embodiment. The rule storage 231, the transmission/reception information storage 232, and the temporary storage 233 may be similar to the rule storage 131, the transmission/reception information storage 132, and the temporary storage 133 as explained in the first to the third embodiments described above.

The controller 21 includes a rule acquisition section 211, a transmission/reception information acquisition section 212, an approval section 213, a transmission/reception control section 214, a confidentiality judgment section 215, and a confidentiality section 216, as processing functions according to the fourth embodiment of the present invention. These processing function sections may be similar to the rule acquisition section 111, the transmission/reception information acquisition section 112, the approval section 113, the transmission/reception control section 114, the confidentiality judgment section 115, and the confidentiality section 116 as explained in the first to the third embodiments described above. Each of these processing function sections is achieved by executing a program stored in the program storage 22 with the hardware processor of the controller 21.

### (Operation Example)

Operations of the sender terminal ST serving as the communication control apparatus according to the fourth embodiment of the present invention may be similar to the operations of the edge server ES as explained in the first to the third embodiments. In this case, it suffices that the edge server ES simply has a function of mediating communication between the sender terminal ST and the center server SS. Specifically, the edge server ES causes the sender terminal ST to download the rule table LT by downloading the rule table LT from the center server SS and transmitting the rule table LT to the sender terminal ST, in accordance with an instruction from the sender terminal ST. In addition, the edge server ES receives a data file to be uploaded from the sender terminal ST, and uploads the data file to the center server SS. As another example, the edge server ES causes the sender terminal ST to download a data file by downloading the designated data file from the center server SS and transmitting the data file to the sender terminal ST, in accordance with an instruction from the sender terminal ST.

### (Operations and Effects)

As described above, the sender terminal ST serving as the communication control apparatus according to the fourth embodiment of the present invention can operate in the same manner as the edge servers ES serving as the communication control apparatuses according to the first to the third embodiments of the present invention, and can produce similar effects.

### <Other Embodiments>

The first to the fourth embodiments have a structure in which two levels are set for approver's approval, that is, "approval is required" and "approval is not required", but the level "approval is required" may be further divided into multiple levels, and different approvers may be set according to the levels.

In addition, each of the embodiments has been explained with an example of the case where two center data stores serve as the upload destinations of data files, but the number of upload destinations may be three or more in the second embodiment because the rule table LT can describe the destination.

In addition, each of the embodiments has been explained with a structure in which the center server SS and the center data store are arranged in the head office HO, but they may be arranged in a place other than the head office HO. In this case, the head office HO can also have the same structure as those of the branch offices in countries.

In addition, the orders of the processing steps illustrated in the flowcharts of FIG. 8, FIG. 9, FIG. 14, FIG. 15, and FIG. 18 are examples, and are not limited thereto. For example, in FIG. 8, the order of Step SB06 of determining whether approval is required and Step SB08 of determining whether encryption is required may be reversed. As described above, the processing order of the processing steps may be changed or the processing steps may be executed in parallel, unless the processing step conflicts with the preceding or subsequent processing step.

The embodiments of the present invention have been described in detail, but the explanations described above are only illustration of examples of the present invention in all respects. Various improvement and/or modification are possible as a matter of course without departing from the scope of the present invention. Specifically, any specific structures according to the embodiments may be properly adopted in implementation of the present invention.

In short, the present invention is not limited to the embodiments described above, but can be embodied with various modifications of constituent elements within a range not departing from the gist of the invention. In addition, various inventions can be made by proper combinations of the constituent elements disclosed in the embodiments described above. For example, some constituent elements may be deleted from the constituent elements disclosed in the embodiment. In addition, constituent elements of different embodiments may be properly used in combination.

### REFERENCE SIGNS LIST

11, 21... Controller
12, 22... Program storage
13, 23... Data storage
14, 15, 24... Communication interface (communication I/F)
16, 26... Bus
25... Input/output interface (input/output I/F)
27... Input device
28... Display
111, 211... Rule acquisition section
112, 212... Transmission/reception information acquisition section
113, 213... Approval section
114, 214... Transmission/reception control section
115, 215... Confidentiality judgment section
116, 216... Confidentiality section
131, 231... Rule storage
132, 232... Transmission/reception information storage
133, 233... Temporary storage
AT... Approver terminal
BOA... Branch office in country A
BOB... Branch office in country B
BOC1... First branch office in country C
BOC2... Second branch office in country C
DS... Local data store
ES... Edge server
FSO... Public data store
FSS... Private data store
HO... Head office
LT... Rule table
NW1... Premises network
NW2... Wide area network
RB... Manufacturing equipment
RC... Robot controller
SS... Center server
ST... Sender terminal

## Claims

1. A communication control apparatus comprising:
a rule acquisition section for downloading and acquiring, from a center server on a cloud, an approval rule by an approver of upload in upload of a data file to the center server;
an approval section for acquiring approval of upload of any data file from the approver in accordance with the approval rule acquired with the rule acquisition section, when the any data file is uploaded to the center server; and
a transmission control section for uploading the data file to the center server on condition that the approval section has acquired approval of upload of the data file from the approver.

2. The communication control apparatus according to claim 1, wherein
the center server stores approval rules corresponding to respective communication control apparatuses, and
the rule acquisition section acquires the approval rule corresponding to the communication control apparatus thereof from the center server.

3. The communication control apparatus according to claim 1, wherein
the approval rule includes a plurality of the approvers corresponding to confidential properties of the data file, and
the approval section determines whether the data file to be uploaded matches with any one of the confidential properties in the approval rule and, when the data file matches, acquires approval from the approver corresponding to the confidential property.

4. The communication control apparatus according to claim 1, wherein
the approval rule includes a plurality of the approvers corresponding to data contents of the data file, and
the approval section determines whether the data content of the data file to be uploaded matches with any one of the data contents in the approval rule and, when the data content matches, acquires approval from the approver corresponding to the data content.

5. The communication control apparatus according to claim 1, wherein
the approval rule includes a rule relating to a confidentiality processing method for the data content of the data file,
the communication control apparatus further comprises:
a confidentiality judgment section for determining whether the data file requires confidentiality, based on whether the approval rule includes the confidentiality processing method for the data content of the data file, when the data file is uploaded to the center server; and
a confidentiality section for executing confidentiality processing, based on the confidentiality processing method for the data content included in the approval rule, when the confidentiality judgment section judges that confidentiality is required for the data content, for the data file for which approval of upload has been acquired from the approver.

6. The communication control apparatus according to claim 5, wherein the confidentiality processing method for the data content of the data file includes at least one of encryption of the data file, processing or deletion of the data content of the data file, and prohibition of transmission of the data file.

7. The communication control apparatus according to claim 5, wherein
the confidentiality judgment section judges whether the data file requires confidentiality, based on whether the approval rule includes the confidentiality processing method for the data content for the data file, when the data file is downloaded from the center server, and
the confidentiality section executes confidentiality processing for the downloaded data file, based on the confidentiality processing method for the data content included in the approval rule, when the confidentiality judgment section judges that confidentiality of the data content is required.

8. The communication control apparatus according to claim 7, wherein the confidentiality processing method for the data content of the data file includes at least one of deletion of the downloaded data file and processing or deletion of the data content of the data file.

9. The communication control apparatus according to claim 1, wherein
the approval rule includes storage destination information designating the storage destination in the center server for the data file, and
the transmission control section designates the storage destination based on the storage destination information included in the approval rule, and uploads the data file to the center server.

10. The communication control apparatus according to claim 1, wherein
the approval rule includes specification information specifying the approver who should execute approval of upload of the data file, and
the approval section specifies the approver from whom approval should be acquired, based on the specification information included in the approval rule, and acquires approval of upload of the data file from the approver.

11. The communication control apparatus according to claim 1, wherein the communication control apparatus is included in an edge server connected to a generation device for generating the data file, a data store for storing the data file generated with the generation device, a transmission instruction device for issuing an instruction to transmit the data file, and an approval device with which the approver executes approval, via a premises network.

12. The communication control apparatus according to claim 1, wherein
a generation device for generating the data file, a data store for storing the data file generated with the generation device, a transmission instruction device for issuing an instruction to transmit the data file, an approval device with which the approver executes approval, and an edge server for executing communication with the center server are mutually connected via a premises network, and
the communication control apparatus is included in the transmission instruction device.

13. A communication control method for controlling upload of a data file to a center server on a cloud, comprising:
with a computer,
downloading and acquiring, from the center server, an approval rule by an approver of upload in upload of the data file to the center server, the approval rule being stored in the center server;
acquiring approval of upload of any data file from the approver in accordance with the acquired approval rule, when the any data file is uploaded to the center server; and
uploading the data file to the center server on condition that approval of upload of the data file has been acquired from the approver.

14. A program causing a computer to operate to cause a processor included in the communication control apparatus according to any one of claims 1 to 12 to execute processing executed with each of the sections included in the communication control apparatus.
